## Europäisches Patentamt

## European Patent Office

## Office européen des brevets

(19)

(11) Veröffentlichungsnummer: **0 044 492**
**B1**

(12) **EUROPÄISCHE PATENTSCHRIFT**

(45) Veröffentlichungstag der Patentschrift:
**23.01.85**

(51) Int. Cl.⁴: **G 01 N 23/207**

(21) Anmeldenummer: **81105407.1**

(22) Anmeldetag: **10.07.81**

(54) **Spannungsmessgoniometer zur röntgenografischen Messung mechanischer Spannungen.**

(30) Priorität: **17.07.80 DE 3027165**

(43) Veröffentlichungstag der Anmeldung:
**27.01.82 Patentblatt 82/4**

(45) Bekanntmachung des Hinweises auf die Patenterteilung:
**23.01.85 Patentblatt 85/4**

(84) Benannte Vertragsstaaten:
**AT CH FR GB IT LI NL SE**

(56) Entgegenhaltungen:
**DE - B - 2 633 114**

(73) Patentinhaber: **KRAFTWERK UNION AKTIENGESELLSCHAFT, Wiesenstrasse 35, D-4330 Mülheim (Ruhr) (DE)**

(72) Erfinder: **Wolf, Helmut, Dr., Uhlenbroicher Weg 66, D-4100 Duisburg-Grossenbaum (DE)**
Erfinder: **Stücker, Erwin, Neue Heimat 16, D-4300 Essen (DE)**

(74) Vertreter: **Mehl, Ernst, Dipl.-Ing. et al, Postfach 22 01 76, D-8000 München 22 (DE)**

**Beschreibung**

Die Erfindung bezieht sich auf ein Spannungsmeßgoniometer zur röntgenografischen Messung mechanischer Spannungen mit einer auf einem ersten Schlitten angeordneten Röntgenröhre und einem auf einem zweiten Schlitten angeordneten Detektor, wobei der erste Schlitten auf der konvexen Seite einer halbkreisförmigen Führungsbahn und der zweite Schlitten auf dem ersten Schlitten geführt ist.

Derartige nach dem Prinzip der Röntgenbeugung arbeitende Spannungsmeßgoniometer (DE-B-2 633 114) ermöglichen eine schnelle und genaue Messung innerer Spannungen auch an großen Werkstücken oder Bauteilen. Die bekannte Meßeinrichtung ist auf einem stabilen Rohrgerüst aufgebaut, welches mit vier allseitig verstellbaren Beinen versehen ist. Diese Beine können festgeklemmt werden und ermöglichen eine starre Verbindung zwischen dem Spannungsmeßgoniometer und dem Prüfling. Der Kontakt mit diesem erfolgt mit elektrisch erregten Haftmagneten oder bei nichtmagnetischem Material über Saugfüße. Zur genauen Justierung sind drei Schlittenführungen vorgesehen, über welche die halbkreisförmige Führungsbahn mit Röntgenröhre und Detektor parallel zur Probenoberfläche und senkrecht dazu kontinuierlich verstellt werden kann.

Das bekannte Spannungsmeßgoniometer ist in erster Linie für die Messung mechanischer Spannungen an ebenen oder konvex gekrümmten Werkstücken oder Bauteilen geeignet. Die Spannungsmessung an Bauteilen mit konkaven Krümmungen wie z. B. an verwundenen Turbinenschaufeln bereitet dagegen Schwierigkeiten. So ist beispielsweise ein Einsatz des bekannten Spannungsmeßgoniometers für die Spannungsmessung an den Turbinenschaufeln eines beschaufelten Turbinenläufers nicht möglich.

Der Erfindung liegt daher die Aufgabe zugrunde, die Flexibilität des bekannten Spannungsmeßgoniometers im Hinblick auf die Einsatzmöglichkeiten zu erhöhen, wobei die hohe Meßgenauigkeit erhalten bleiben soll.

Diese Aufgabe wird bei einem Spannungsmeßgoniometer der eingangs genannten Art erfindungsgemäß dadurch gelöst, daß die halbkreisförmige Führungsbahn in einem biegesteifen und im wesentlichen U-förmig ausgebildeten Adapter aufgenommen ist, wobei der eine Schenkel des Adapters die halbkreisförmige Führungsbahn auf einer konzentrisch zu der halbkreisförmigen Führungsbahn verlaufenden Wölbung dieses Schenkels trägt und wobei an dem anderen Schenkel des Adapters eine Adapterhalterung angebracht ist. Durch die feste Anordnung der halbkreisförmigen Führungsbahn in den Adapter wird eine freie und genaue Justierung des Spannungsmeßgoniometers in bezug auf den Prüfling ermöglicht, wobei eine Verbindung zwischen Spannungsmeßgoniometer und Prüfling ohne die Gefahr einer Dejustierung entfallen kann. Die Halterung des Adapters erfolgt über die Adapterhalterung und über eine auf den jeweiligen Einsatz des Spannungsmeßgoniometers abgestimmte Halteeinrichtung, wie z. B. über ein Stativ.

Bei einer bevorzugten Ausführungsform des erfindungsgemäßen Spannungsmeßgoniometers ist die Adapterhalterung in bezug auf eine in Höhe des Strahlengangs verlaufende Symmetrieachse der halbkreisförmigen Führungsbahn zentrisch spannbar. Hierdurch wird die Justierung des Spannungsmeßgoniometers in bezug auf einen Prüfling weiter erleichtert. Insbesondere kann die Adapterhalterung dann in der Spannvorrichtung einer Dreheinrichtung aufgenommen werden, wodurch eine azimutale Drehung des Spannungsmeßgoniometers um diese normal zu der Probenoberfläche ausgerichtete Symmetrieachse und somit eine genaue Erfassung des Spannungsellipsoids, d. h. des Gesamtspannungszustandes ermöglicht wird. Als Dreheinrichtung kann hierbei ein Drehtisch oder ein Drehkipptisch verwendet werden, wobei in letzterem Falle die Justierung in bezug auf geneigte Probenoberflächen erleichtert wird.

Bei einer weiteren Ausgestaltung des erfindungsgemäßen Spannungsmeßgoniometers ist der eine Schenkel in dem an die Wölbung anschließenden Bereich zum anderen Schenkel hin geneigt. Hierdurch wird auch eine Spannungsmessung in relativ engen konkaven Wölbungen eines Prüflings ermöglicht.

Bei einer weiteren bevorzugten Ausführungsform des erfindungsgemäßen Spannungsmeßgoniometers ist zwischen den beiden Schenkeln des nachfolgend auch als Zwischenadapter bezeichneten Adapters mindestens eine Versteifungsrippe angeordnet. Durch derartige Versteifungsrippen wird die Biegesteifigkeit des Zwischenadapters und damit die Meßgenauigkeit des Spannungsmeßgoniometers weiter erhöht.

Im folgenden werden Ausführungsbeispiele der Erfindung anhand der Zeichnung näher erläutert. Dabei zeigt

Fig. 1 ein in einem Zwischenadapter angeordnetes Spannungsmeßgoniometer in stark vereinfachter schematischer Darstellung,

Fig. 2 ein Spannungsmeßgoniometer in perspektivischer Darstellung und

Fig. 3 das in Fig. 2 dargestellte und in einen Zwischenadapter eingebaute Spannungsmeßgoniometer in perspektivischer Darstellung.

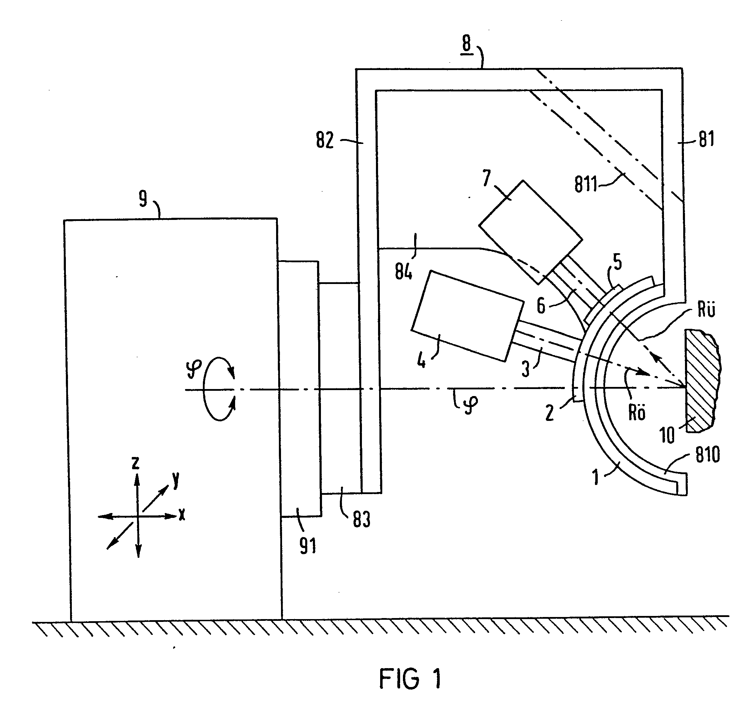

In Fig. 1 ist ein Spannungsmeßgoniometer dargestellt, bei welchem auf der konvexen Seite einer halbkreisförmigen Führungsbahn 1 ein erster Schlitten 2 geführt ist, welcher über einen Röhrenhalter 3 eine Röntgenröhre 4 trägt. Auf der konvexen Seite des ersten Schlittens 2 ist ein zweiter Schlitten 5 geführt, welcher auch als Detektorschlitten bezeichnet wird und über einen Detektorhalter 6 einen Detektor 7 trägt. Dieses Spannungsmeßgoniometer ist in einem insgesamt mit 8 bezeichneten U-förmigen Zwischenadapter angeordnet; dessen einer Schenkel 81 eine konzentrisch zu der halbkreisförmigen Führungsbahn 1 verlaufende Wölbung 810 aufweist. Auf der konvexen Seite dieser Wölbung 810 ist die halbkreisförmige Führungsbahn 1 mit Hilfe von in der Zeichnung nicht näher dargestellten Paßstiften und Schrauben befestigt. An dem anderen Schenkel 82 des Zwischenadapters 8 ist eine Adapterhalterung 83 befestigt, welche in der Spannvorrichtung 91 eines Drehtisches 9 aufgenommen ist. Eine zwischen den beiden Schenkeln 81 und 82 angeordnete Versteifungsrippe 84 dient zur Erhöhung der Biegesteifigkeit des Zwischenadapters 8.

Ein Prüfling 10 ist in bezug auf das Spannungsmeßgoniometer so angeordnet, daß die Probenoberfläche in Höhe des Mittelpunktes der halbkreisförmigen Führungsbahn 1 senkrecht zu einer mit $\varphi$ bezeichneten Achse ausgerichtet ist. Diese $\varphi$-Achse entspricht der Drehachse des Drehtisches 9 und verläuft in Höhe des Röntgenstrahls Rö und des an dem Prüfling 10 reflektierten Rückstrahls Rü. Zur Ermittlung der Spannungen in dem Prüfling 10 werden Messungen mit verschiedenen Einstrahlrichtungen vorgenommen, wobei die Röntgenröhre 4 zur Änderung der Einstrahlrichtung über den Schlitten 2 bewegt wird und wobei die Röntgenröhre 4 zur Änderung der Einstrahlrichtung über den Schlitten 2 bewegt wird und wobei der Detektor 7 zur Erfassung des Rückstrahls Rü über den Detektorschlitten 5 verstellt werden kann. Um das Spannungsellipsoid, d. h. den Gesamtspannungszustand im Prüfling 10 vollständig erfassen zu können, wird mit Hilfe des Drehtisches 9 eine azimutale Drehung der Einstrahlrichtung um die $\varphi$-Achse vorgenommen.

Durch strichpunktiert dargestellte Linien ist in Fig. 1 ein geneigt verlaufender Bereich 811 des Schenkels 81 angedeutet, welcher einer Abschrägung des Zwischenadapters 8 entspricht. Durch eine derartige Abschrägung können auch Spannungsmessungen in relativ engen konkaven Wölbungen eines Werkstückes oder Bauteils vorgenommen werden.

Zur genauen Justierung des Spannungsmeßgoniometers in bezug auf den Prüfling 10 kann der Drehtisch 9 mit zusätzlichen und in der Zeichnung nicht näher dargestellten Verstellmöglichkeiten ausgerüstet werden. Eine Verstellung in senkrechter Richtung zur Probenoberfläche ist hierbei durch eine mit x bezeichnete Achse angedeutet, während eine Verstellung parallel zur Probenoberfläche durch mit y und z bezeichnete Achsen angedeutet ist.

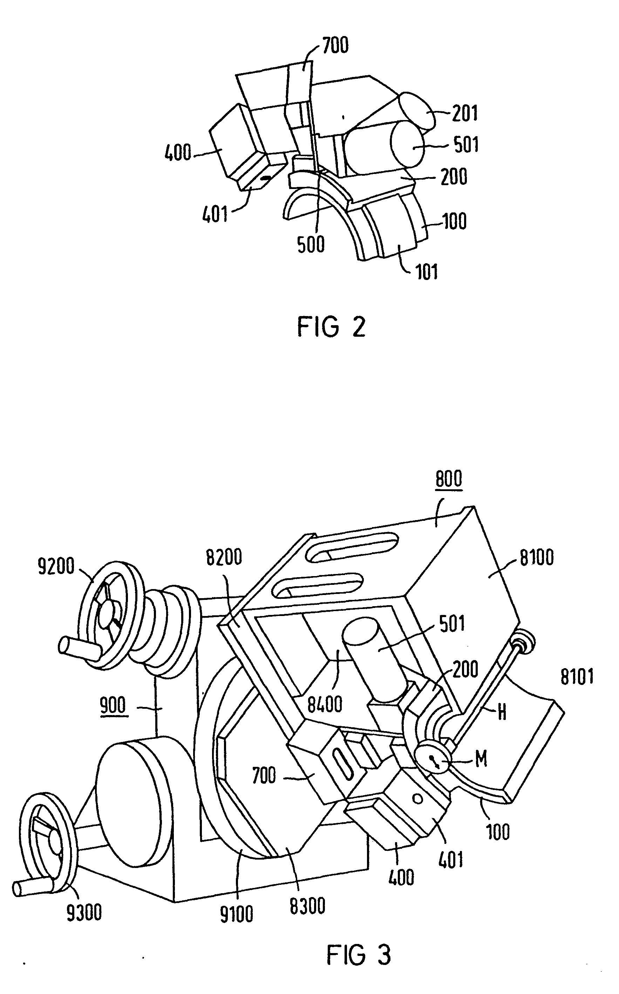

Fig. 2 zeigt in perspektivischer Darstellung ein Spannungsmeßgoniometer, welches für den Einbau in einen Zwischenadapter bestimmt ist. Auf der konvexen Seite einer halbkreisförmigen Führungsbahn 100 befindet sich eine Führungsschiene 101, auf welcher ein erster Schlitten 200 geführt ist. Dieser Schlitten 200 trägt eine in einer Haube untergebrachte Röntgenröhre 400 und die dazugehörige Aperturblende 401. Auf der konvexen Seite des ersten Schlittens 200 ist ein Detektorschlitten 500 geführt, welcher einen Detektor 700 trägt. Zum Antrieb für die Verstellung der Röntgenröhre 400 über den ersten Schlitten 300 ist ein Schrittmotor 201 und zum Antrieb für die Stellung des Detektors 700 über den Detektorschlitten 500 ist ein Schrittmotor 501 vorgesehen.

Das in Fig. 2 dargestellte Spannungsmeßgoniometer wird gemäß Fig. 3 in einem insgesamt mit 800 bezeichneten Zwischenadapter untergebracht. Der eine Schenkel 8100 des im wesentlichen U-förmig ausgebildeten Zwischenadapters 800 besitzt eine kreisförmige Wölbung 8101, auf welcher die halbkreisförmige Führungsbahn 100 befestigt ist. Der andere Schenkel 8200 des Zwischenadapters 800 trägt eine fest angeschweißte und plattenförmig ausgebildete Adapterhalterung 8300, welche in der Spannvorrichtung 9100 eines Drehkipptisches 900 zentrisch aufgenommen ist. Zur Versteifung des Zwischenadapters 800 ist zwischen den beiden Schenkeln 8100 und 8200 eine Versteifungsrippe 8400 angeordnet.

Die Spannvorrichtung 9100 des Drehkipptisches 900 kann über eine Handkurbel 9200 gedreht werden, d. h., daß über die Handkurbel 9200 eine azimutale Drehung der Einstrahlrichtung zur Erfassung des Gesamtspannungszustandes eines Prüflings vorgenommen werden kann. Über die zweite Handkurbel 9300 des Drehkipptisches kann die Achse der Spannvorrichtung 9100 geneigt werden, wodurch die Justierung des Spannungsmeßgoniometers in bezug auf eine geneigte Probenoberfläche erleichtert wird. Zur Kontrolle der Abstände bei der Justierung des Spannungsmeßgoniometers ist eine Meßuhr M vorgesehen, welche an einer im Bereich der konkaven Seite der Wölbung 8101 angeordneten Meßuhrhalterung H befestigt ist.

Die in Fig. 3 dargestellte Meßeinrichtung kann unter anderem auch für die Spannungsmessung an den Turbinenschaufeln eines beschaufelten Turbinenläufers eingesetzt werden. Hierzu wird der Drehkipptisch 900 bei abgenommenen Oberteil des Turbinengehäuses auf die Teilfuge des unteren Gehäuseteils aufgesetzt und über die Handkurbel 9300 so weit gekippt, bis die $\varphi$-Achse des Spannungsmeßgoniometers senkrecht zur Schaufeloberfläche im Meßbereich ausgerichtet ist. Nach erfolgter Justierung kann zur Erfassung des Gesamtspannungszustandes auch eine Drehung um die $\varphi$-Achse vorgenommen werden, wobei die Gefahr einer Dejustierung nicht besteht und somit die hohe Meßgenauigkeit der Meßeinrichtung nicht beeinträchtigt wird.

**Patentansprüche**

1. Spannungsmeßgoniometer zur röntgenografischen Messung mechanischer Spannungen, mit einer auf einem ersten Schlitten (2) angeordneten Röntgenröhre (4) und einem auf einem zweiten Schlitten (5) angeordneten Detektor (7), wobei der erste Schlitten auf der konvexen Seite einer halbkreisförmigen Führungsbahn (1) und der zweite Schlitten auf dem ersten Schlitten geführt ist, dadurch gekennzeichnet, daß die halbkreisförmige Führungsbahn (1) in einem biegesteifen und im wesentlichen U-förmig ausgebildeten Adapter (8) aufgenommen ist, wobei der eine Schenkel (81) des Adapters (8) die halbkreisförmige Führungsbahn (1) auf einer konzentrisch zu der halbkreisförmigen Führungsbahn (1) verlaufenden Wölbung (810) dieses Schenkels trägt und wobei an dem anderen Schenkel (82) des Adapters (8) eine Adapterhalterung (83) angebracht ist.

2. Spannungsmeßgoniometer nach Anspruch 1, dadurch gekennzeichnet, daß die Adapterhalterung (83) in bezug auf eine in Höhe des Strahlengangs (Rö, Rü) verlaufende Symmetrieachse ($\varphi$) der halbkreisförmigen Führungsbahn (1) zentrisch spannbar ist.

3. Spannungsmeßgoniometer nach Anspruch 2, dadurch gekennzeichnet, daß die Adapterhalterung (83) in der Spannvorrichtung (91, 910) einer Dreheinrichtung aufgenommen ist.

4. Spannungsmeßgoniometer nach Anspruch 3, dadurch gekennzeichnet, daß die Dreheinrichtung ein Drehtisch (9) ist.

5. Spannungsmeßgoniometer nach Anspruch 3, dadurch gekennzeichnet, daß die Dreheinrichtung ein Drehkipptisch (900) ist.

6. Spannungsmeßgoniometer nach einem der vorhergehenden Ansprüche, dadurch gekennzeichnet, daß der eine Schenkel (81) in dem an die Wölbung (810) anschließenden Bereich (811) zum anderen Schenkel (83) hin geneigt ist.

7. Spannungsmeßgoniometer nach einem der vorhergehenden Ansprüche, dadurch gekennzeichnet, daß zwischen den beiden Schenkeln (81, 82) des Adapters (8) mindestens eine Versteifungsrippe (84) angeordnet ist.

## Claims

1. A goniometer for measuring mechanical stresses using X-rays, with an X-ray tube (4) arranged on a first slide (2), and a detector (7) arranged on a second slide (5), where the first slide runs on the convex side of a semicircular guide path (1) and the second slide runs on the first slide, characterised in that the semicircular guide path (1) is accommodated in a bend-resistant and basically U-shaped adapter (8), the adapter (8) having a first flank (81) which bears the semicircular guide path (1) on a curvature (810) of this flank which runs concentrically with the semicircular guide path (1), and where an adapter holder (83) is arranged on the other flank (82) of the adapter (8).

2. A goniometer as claimed in claim 1, characterised in that the adapter holder (83) can be clamped centrally relative to an axis of symmetry ($\varphi$) of the semicircular guide path (1) which extends at the level of the beam path (Rö, Rü).

3. A goniometer as claimed in claim 2, characterised in that the adapter holder (83) is held in a clamp (91, 910) of a rotating device.

4. A goniometer as claimed in claim 3, characterised in that the rotating device is a turntable (9).

5. A goniometer as claimed in claim 3, characterised in that the rotating device is a tilting turntable (900).

6. A goniometer as claimed in one of the preceding claims, characterised in that the first flank (81) is inclined towards the other flank (83) in the zone (811) adjoining the curvature (810).

7. A goniometer as claimed in one of the preceding claims, characterised in that at least one stiffening rib (84) is arranged between the two flanks (81, 82) of the adapter (8).

## Revendications

1. Goniomètre de mesure de contraintes permettant la mesure radiographique de contraintes mécaniques, comportant un tube (4) à rayons X disposé sur un chariot (2) et un déctecteur (7) monté sur un second chariot (5), le premier chariot étant guidé sur la face convexe d'une glissière semi-circulaire (1), tandis que le second chariot est guidé sur le premier chariot, caractérisé par le fait que la glissière semi-circulaire (1) est logée dans un adaptateur (8) réalisé essentiellement en forme de U, une branche (81) de l'adaptateur (8) portant la glissière semi-circulaire (1) sur une partie cintrée (810) disposée concentriquement par rapport la glissère semicirculaire (1), tandis qu'un support d'adaptateur (83) est monté sur l'autre branche (82) de l'adaptateur (8).

2. Goniomètre de mesure de contraintes suivant la revendication 1, caractérisé par le fait que le support d'adaptateur (83) peut être bloqué de façon centrée par rapport à un axe de symétrie ($\varphi$), qui s'étend à hauteur du trajet de rayonnement (Rö, Rü), de la glissière semicirculaire (1).

3. Goniomètre de mesure de contraintes, suivant la revendication 2, caractérisé par le fait que le support d'adaptateur (83) est logé dans le dispositif de serrage (91, 910) d'un dispositif d'entraînement en rotation.

4. Goniomètre de mesure de contraintes, selon la revendication 3, caractérisé par le fait que le dispositif d'entraînement en rotation est un plateau rotatif (9).

5. Goniomètre de mesure de contraintes, suivant la revendication 3, caractérisé par le fait que le dispositif d'entraînement en rotation est un plateau basculant (900).

6. Goniomètre de mesure de contraintes, suivant l'une des revendications précédentes, caractérisé par le fait qu'une branche (81) est inclinée par rapport à l'autre branche (83), dans la région (811) jouxtant la partie cintrée (810).

7. Goniomètre de mesure de contraintes, suivant l'une des revendications précédentes, caractérisé par le fait qu'au moins une nervure de renforcement (84) est disposée entre les deux branches (81, 82) de l'adaptateur (8).

FIG 1

FIG 2

FIG 3